(19) Europäisches Patentamt
European Patent Office
Office européen des brevets

(11) EP 1 126 292 A2

## (12) EUROPEAN PATENT APPLICATION

(43) Date of publication:
22.08.2001 Bulletin 2001/34

(51) Int Cl.⁷: $G02B\ 5/30$, $G02F\ 1/1335$

(21) Application number: 01110894.1

(22) Date of filing: 20.12.1994

(84) Designated Contracting States:
DE ES FR GB IT

(30) Priority: 21.12.1993 US 171098

(62) Document number(s) of the earlier application(s) in accordance with Art. 76 EPC:
95905367.9 / 0 736 187

(71) Applicant: MINNESOTA MINING AND MANUFACTURING COMPANY
St. Paul, Minnesota 55133-3427 (US)

(72) Inventors:
• Ouderkirk, Andrew J.
Saint Paul, Minnesota 55133-3427 (US)
• Weber, Michael F.
Saint Paul, Minnesota 55133-3427 (US)

• Jonza, James M.
Saint Paul, Minnesota 55133-3427 (US)
• Stover, Carl A.
Saint Paul, Minnesota 55133-3427 (US)

(74) Representative:
Meyers, Hans-Wilhelm, Dr.Dipl.-Chem. et al
Patentanwälte
von Kreisler-Selting-Werner
Postfach 10 22 41
50462 Köln (DE)

Remarks:
THIS APPLICATION WAS FILED ON 05 - 05 - 2001 AS A DIVISIONAL APPLICATION TO THE APPLICATION MENTIONED UNDER INID CODE 62

### (54) Optical Polarizer

(57) A reflective polarizer and a dichroic polarizer are combined to provide an improved optical polarizer. The dichroic and reflective polarizers are typically in close proximity to each other, and are preferably bonded together to eliminate the air gap between the polarizers. The combination of the two polarizers provides a high reflectivity of one polarization and high transmission for the perpendicular polarization from the reflective polarizer side of the combined polarizer, and high absorption and transmission for light of orthogonal polarization from the dichroic polarizer side. The combination also reduces iridescence as seen in transmission and when viewed in reflection from the dichroic polarizer side. The increased extinction ratio and low reflectivity of the optical polarizer allows use of a lower extinction ratio dichroic polarizer in applications requiring a given extinction ratio and high transmission.

Fig. 1

EP 1 126 292 A2

**Description**

Technical Field

The invention is an improved optical polarizer.

Background

Optical polarizing film is widely used for glare reducing sunglasses, increasing optical contrast, and in Liquid Crystal Displays (LCD). The most commonly used type of polarizer used in these applications is a dichroic polarizer. Dichroic polarizers are made by incorporating a dye into a polymer sheet that is stretched in one direction. Dichroic polarizers can also be made by uniaxially stretching a semicrystalline polymer such as polyvinyl alcohol, then staining the polymer with an iodine complex or dichroic dye, or by coating a polymer with an oriented dichroic dye. These polarizers typically have an extinction ratio (the ratio of transmission of light polarized perpendicular to the stretch direction to the polarization parallel to the stretch direction) of over 500:1. Dichroic polarizers normally has some absorption of light polarized in the high transmission orientation. Losses in this orientation are typically 10-20%.
Commercial polarizers typically use polyvinyl alcohol as the polymer matrix for the dye, however other polymers can be used. US Patent 4,756,953 describes the use of polyethylene naphthalate as the polymer matrix.
Low profile, sheet form reflective polarizers are available that reflect one polarization of light and transmit the other. These polarizers tend to be more efficient in transmitting light of the high transmission polarization. This is due to the use of a non-absorbing dielectric stack for polarizing light. These polarizers tend to have equal reflectivity for light irradiating the sheet from either side. These types of polarizers also tend to have some defects, such as leakage of light through localized areas of the sheet, and incomplete reflectivity of the high extinction polarization over the wavelength region of interest. This leakage of light and incomplete reflectivity is often called iridescence.

Summary

A reflective polarizer and a dichroic polarizer are combined to provide an improved optical polarizer. The dichroic and reflective polarizers are typically in close proximity to each other, and are preferably bonded together to eliminate the air gap between the polarizers. The combination of the two polarizers provides a high reflectivity for light of a first polarization and high transmission for light of a second, perpendicular polarization from the reflective polarizer side of the optical polarizer, and high absorption for light of the first polarization and high transmission for light of the second, perpendicular polarization from the dichroic polarizer side. Iridescence as seen in transmission and when viewed in reflection from the dichroic polarizer side is also reduced as compared to the reflective polarizer alone. This reduction in iridescence is useful in improving the cosmetic appearance of optical displays, the extinction ratio of optical polarizers, and the optical uniformity of a display.
The increased extinction ratio and low reflectivity of the present optical polarizer allows use of a lower extinction ratio dichroic polarizer in applications requiring a given extinction ratio. By lowering the extinction ratio required of dichroic polarizer the absorptive losses in the dichroic polarizer for transmitted rays can be reduced. Thus, the present optical polarizer has improved transmissive extinction ratios for rays entering from either side of the present optical polarizer, low reflected intensity for rays partially transmitted by the dichroic polarizer in the first polarization that are reflected by the reflective polarizer, and lower absorptive losses as compared to a dichroic polarizer alone.

Brief Description of the Drawings

The various objects, features and advantages of the present optical polarizer shall be better understood upon reading and understanding the following detailed description and accompanying drawings in which:

FIGURE 1 shows the present optical polarizer, including a reflective polarizer and a dichroic polarizer placed proximate thereto;
FIGURE 2 shows a preferred multilayer reflective polarizer having a dichroic polarizer bonded thereto;
FIGURE 3 shows one embodiment of a display incorporating a reflective polarizer and dichroic polarizer;
FIGURE 4 shows another emboidment of a display incorporating a reflective polarizer and dichroic polarizer;
FIGURE 5 shows another embodiment of a display incorporating two combined reflective polarizers and dichroic polarizers;
FIGURE 6 shows a liquid crystal display incorporating a reflective polarizer and a dichroic polarizer;
Figure 7 shows a two layer stack of films forming a single interface.
Figures 8 and 9 show reflectivity versus angle curves for a uniaxial birefringent system in a medium of index 1.60.

Figure 10 shows reflectivity versus angle curves for a uniaxial birefringent system in a medium of index 1.0.
Figures 11, 12 and 13 show various relationships between in-plane indices and z-index for a uniaxial birefringent system.
Figure 14 shows off axis reflectivity versus wavelength for two different uniaxial birefringent systems.
Figure 15 shows the effect of introducing a y-index difference in a biaxial birefringent film.
Figure 16 shows the effect of introducing a z-index difference in a biaxial birefringent film.
Figure 17 shows a contour plot summarizing the information from Figures 10 and 11;
Figures 18-23 show optical performance of multilayer mirrors given in the mirror Examples; and
Figures 24-27 show optical performance of multilayer polarizers given in the polarizer Examples.

Detailed Description

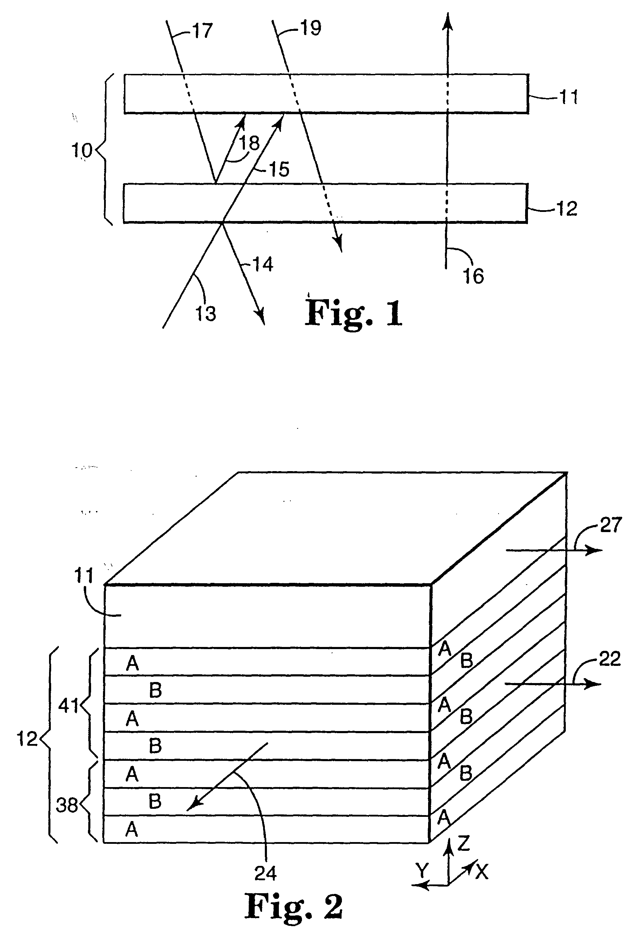

FIG. 1 shows an optical polarizer 10 that has two primary components. These are a dichroic polarizer 11 and a reflective polarizer 12. The two polarizers are aligned to provide maximum transmissivity. The combination of the two polarizers provides a high reflectivity for light of a first polarization and high transmission for light of a second, perpendicular polarization from the reflective polarizer side of the optical polarizer, and high absorption for light of the first polarization and high transmission for light of the second, perpendicular polarization from the dichroic polarizer side.
In use, the combined polarizers are illuminated on one or both of the outside facing surfaces. Ray 13 is of a polarization that is preferentially reflected by reflective polarizer 12 to form ray 14. Light of ray 13 transmitted by reflective polarizer 12 forms ray 15 which is attenuated by dichroic polarizer 11. Light ray 16 which is perpendicularly polarized to ray 13 is preferentially transmitted by reflective polarizer 12 and is slightly attenuated by dichroic polarizer 11. Ray 17 is of a polarization that is preferentially absorbed by dichroic polarizer 11, and which is also preferably of the same polarization as ray 13. The portion of light of ray 17 which is transmitted by dichroic polarizer 11 is further attenuated by reflection off reflective polarizer 12 forming ray 18 which is further absorbed by dichroic polarizer 11. Light ray 19 which is polarized perpendicular to ray 17, and which is of the same polarization as ray 16, is preferentially transmitted by both dichroic and reflective polarizers 11 and 12, respectively.
The dichroic polarizer 11 is typically in close proximity to the reflective polarizer 12. Preferably they are bonded to each other to eliminate the air gap between the polarizers, as shown in FIG. 2.
The preferred and illustrative reflective polarizer body 12 shown in FIG. 2 is made of alternating layers (ABABA...) of two different polymeric materials. These are referred to as material "(A)" and material "(B)" throughout the drawings and description. The two materials are extruded together and the resulting multiple layer (ABABA...) material is stretched (5:1) along one axis (X) and is not stretched appreciably (1:1) along the other axis (Y). The X axis is referred to as the "stretched" direction while the Y axis is referred to as the "transverse" direction.
The (B) material has a nominal index of refraction (1.64 for example) which is not substantially altered by the stretching process. The (A) material has the property of having the index of refraction altered by the stretching process. For example, a uniaxially stretched sheet of the (A) material will have one index of refraction (1.88 for example) associated with the stretched direction and a different index of refraction (1.64 for example) associated with the transverse direction. By way of definition, the index of refraction associated with an in-plane axis (an axis parallel to the surface of the film) is the effective index of refraction for plane-polarized incident light whose plane of polarization is parallel to that axis.
Thus, after stretching, the multiple layer stack (ABABA...) of material shows a large refractive index difference between layers (1.88 minus 1.64) associated with the stretched direction. While in the transverse direction, the associated indices of refraction between layers are essentially the same (1.64 and 1.64 in the example). These optical characteristics cause the multiple layer laminate to act as a reflecting polarizer that will transmit the polarization component of the incident light which is correctly oriented with respect to the axis 22. Axis 22 is defined as the transmission axis. The light which emerges from the reflective polarizer body 12 is referred to as having a first polarization orientation.
The light which does not pass through the reflective polarizer body 12 has a polarization orientation orthogonal or perpendicular to the first orientation. Light exhibiting this polarization orientation will encounter the index difference which results in reflection of this light. This defines a so-called "extinction" axis 24. In this fashion the reflective polarizer body 12 passes light having a selected polarization.
The optical performance of the reflective polarizer body 12 depends in part on the optical thicknesses of the various layers. Both thick film and thin film constructions are useful. If the layers exhibit optical thicknesses that are many wavelengths of light long, then the optical properties are inherently broad band. If the layers have an optical thickness less than a wavelength of light, then constructive interference can be exploited to improve the optical performance of the reflective polarizer body 12 at selected wavelengths.
The manufacturing procedure described in the example can produce uniform layers that have an optical thickness that is less than the wavelength of light over the visible spectrum. Constructive interference occurs if pairs of layers (A,B) add to one half of the wavelength of the incident light (A+B=lambda/2). This half wavelength condition results in narrow band constructive interference at the design wavelength. Broad band optical performance can be achieved by laminating or otherwise coupling multiple narrow band stacks. For example, a first group 38 of layers having the same thickness (A+B=lambda/2) can be laminated to a second group 41 having a different thickness (A+B=lambda prime/2). For the sake of clarity only a small number of layers are shown in FIG. 2, although typically hundreds of layers (ABAB...) may be stacked together to achieve efficient broad band response. Preferably the reflective polarizer body 12 should be designed to reflect light at all angles and wavelengths of interest.

The manufacture of the multilayer film stack often times incorporates "skin" layers to surround the multilayer stack. Typically this skin layer is composed of either polymer "A" or polymer "B", and is thicker than the wavelength of light.

The optical performance and uniformity of a reflective polarizer can be improved by adding a dichroic polarizer proximate to at least one side of the multilayer stack, or by incorporating a dichroic polarizer into at least one of the layers in the multilayer stack. In such a configuration, the transmission axis 27 of the dichroic polarizer 11 is preferably aligned with the transmission axis 22 of the reflective polarizer 12. When the dichroic polarizer 11 is on one side of reflective polarizer 12, as shown in FIG. 1, the reflection of light ray 17 on the dichroic polarizer side will be reduced due to attenuation of reflected ray 18 by dichroic polarizer 11 in comparison to the reflection of ray 17 off reflective polarizer 12 without dichroic polarizer 11. The reflectivity of ray 13 off reflective polarizer 12 is not substantially affected by dichroic polarizer 11. This produces an optical polarizer 10 which is antireflective on at least one side. Antireflection of one side of the optical polarizer 10 is useful in displays, particularly in certain backlit displays where the reflected polarization can be used to increase the display brightness while the other side, the viewing side, of the polarizer must not reflect light. Iridescence as seen in transmission through either direction, and iridescence when viewed in reflection from the dichroic polarizer side are reduced by the addition of dichroic polarizer 11. This reduction in iridescence is useful in improving the cosmetic appearance of the display, the extinction ratio of the polarizer, and the optical uniformity of the display.

The configuration of dichroic and reflective polarizers shown in FIG. 1 creates a high efficiency optical polarizer. Combining dichroic polarizer 11 with reflective polarizer 12 results in an optical polarizer 10 which has a higher extinction ratio for transmitted light than that which is achieved using the dichroic polarizer alone. This configuration also produces low reflectivity for ray 17 from the dichroic polarizer side due to attenuation of reflected ray 18 by dichroic polarizer 11. For applications requiring a given extinction ratio and high transmissivity, the increased extinction ratio and low reflectivity of optical polarizer 10 allows the use of a dichroic polarizer 11 which has a lower extinction of the first polarization than could otherwise be used. By lowering the extinction required of dichroic polarizer 11, the absorptive losses in polarizer 11 for transmitted rays 16 and 19 can be reduced. Thus, the optical polarizer 10 has improved transmissive extinction ratios for ray pair 17 and 19 and ray pair 13 and 16, low reflected intensity for reflected ray 18 off of reflective polarizer 12, and lower absorptive losses than could be achieved using a dichroic polarizer alone. The preferred extinction for the dichroic polarizer 11 for use in liquid crystal displays is 10 to 99.99%, more preferred is 50 to 99%, more preferred is 60 to 97%, and most preferred is 70 to 95%. The preferred extinction for the reflective polarizer is 20 to 99.99%, more preferred is 50 to 99.9% and most preferred is 90 to 99%.

Reflective polarizers may have some dielectric interference in the second polarization at either normal or off-normal angles, or both. This reflection may present problems due to reflected glare and attenuation of transmitted light of the second polarization. An efficient dichroic polarizer aligned as shown in FIG. 1 will only weakly attenuate this reflection. In certain applications, this reflection will be acceptable. In general, however, the reflective polarizer will preferably have minimal reflection in the second polarization over the range of optical angles used by the device (nominally +/- 45 degrees for a TFT or STN liquid crystal display). In general it is preferred that the reflection of the reflective polarizer of linearly polarized light of the second polarization be less than 20%, more preferrably less than 10%, and most preferrably less than 5%. This reflectivity is the average for the wavelength range and use angle range of interest for specific or general applications. It is also preferred that the reflectivity of the reflective polarizer for linearly polarized light of the first polarization be preserved over angles orthogonal to the extinction axis relative to the normal direction. Preferred is that the reflectivity of the first polarization is reduced to no less than 30% at the maximum angle of interest, more preferred is 60%, and most preferred is that the reflectivity be maintained or increase at off-normal angles over the range of angles of interest.

The reflective and dichroic polarizers may be various combinations of broad band and narrow band polarizers. For example, a narrow band reflective polarizer may be combined with a dichroic polarizer with extinction over the same band range. This combination can be used to produce polarizers in the red, green, blue, cyan, magenta, or yellow bands with higher extinction and superior color definition compared to a colored dichroic polarizer. Other combinations include the use of a broad band reflective polarizer with dichroic polarizers with nonuniform extinction in the visible spectrum. For example, certain polyvinyl alcohol/iodine polarizers have excellent extinction in the green and red portion of the spectrum, and less in the blue. This polarizer can be combined with a broad band reflective polarizer in order to provide good extinction at blue wavelengths. Nonuniform optical extinction may also be useful for increasing the optical performance of the combined polarizers. For example, the maximum radiometric transmission from the combination of reflective and dichroic polarizers may be obtained with minimum luminous reflectivity by using a dichroic polarizer with relatively high absorption in the green and less absorption in the blue and red. Insufficient extinction in the reflective polarizer at normal and off-normal angles may also be compensated by increasing the extinction of the dichroic polarizer in the necessary spectral regions. For example, a reflective polarizer that has insufficient extinction for red light of the second polarization at off-normal angles can be compensated by using a dichroic polarizer with relatively red high extinction.

Dichroic polarizer 11 can be incorporated into optical polarizer 10 by placing the reflective and dichroic polarizers in the same optical path or by laminating them together with an adhesive. Dichroic polarizer 11 can be incorporated with reflective polarizer 12 before orientation by extruding or laminating at least one layer of a mixture of dichroic dyestuff in polymer onto the multilayer cast film, by a dichroic dyestuff added to the polymer resin of one or more of the skin layers of the multilayer reflective polarizer, or by adding resin to one or more layers in the multilayer stack. Multilayer extrusion techniques also allow the ability to tailor the distribution of dichroic dye within the individual layers making up the optical stack. This may allow the dye to be located in regions of greatest utility. For example, a dye may be preferably concentrated in regions of maximum or minimum "E" field intensity within the optical stack. By appropriate choice of the dichroic dyestuff and polymer matrix, stretching the resulting film will simultaneously produce the dichroic and reflective polarizers in the proper orientation.

Anthraquinone and azo dyes may be used as the dichroic dye, as well as other dichroic dye materials. In some applications the dye does not have to be highly dichroic when oriented. Applications requiring relatively high absorption of both polarizations, for example, sunglasses or in displays requiring reduced glare, can use a less dichroic, or non-dichroic dye.

The dichroic polarizer 11 may be incorporated into one or both sides of a reflective polarizer by coating a solution of polyvinyl alcohol onto the cast (unoriented) multilayer film and simultaneously forming the multilayer reflective polarizer and the dichroic polarizer. The cast film can be primed for adhesion before coating by solution coating on an inorganic or polymeric primer layer, corona treatment, or by physical treatment. A suitable solution based primer for this application are water soluble copolyesters commonly used for priming polyethylene terephthlate films such as described in U.S. patent 4,659,523. The polyvinyl alcohol coating solution should contain between 2 and 20% polymer in water based on weight, with the preferred concentration being between 5 and 15%. The polyvinyl alcohol should have a degree of hydrolysis of between 95 and 100%, preferably between 97 and 99.5%. The coating weight should range from 2 to 80 grams per square meter. The polyvinyl alcohol coated cast film is then stretched at elevated temperatures to develop oriented polyvinyl alcohol and the multilayer reflective polarizer. This temperature is preferably above the glass transition temperature of least one of the components of the multilayer reflective polarizer. In general, the temperature should be between 80 and 160°C, preferably between 100 and 160°C. The film should be stretched from 2 to 10 times the original dimension. Preferably, the film will be stretched from 3 to 6 times the original dimension. The film may be allowed to dimensionally relax in the cross-stretch direction from the natural reduction in cross-stretch (equal to the square root of the stretch ratio) to being constrained (i.e., no substantial change in cross-stretch dimensions). The film may be stretched in the machine direction, as with a length orienter, in width using a tenter, or at diagonal angles. The oriented polyvinyl alcohol coating is then stained with either iodine based staining solutions, dye based staining solutions, or combinations of the two solutions and stabilized if necessary with suitable solutions such as boric acid and borax in water. Such staining and fixing techniques are known in the art. After drying the film, the dichroic polarizer can be protected by adhesively laminating on a protective film such as cellulose based polymers, acrylate polymers, polycarbonate polymers, solution based or radiation cured acrylate based adhesive or non-adhesive coatings, polyethylene terephthalate or other polyester based films, or an additional sheet of reflective polarizer film. In cases where the state of polarized light rays entering or exiting the polarizer 10 from the dichroic polarizer side is not critical, birefringent polymers such as biaxially oriented polyethylene terephthalate may be used as the protective layer.

A dichroic polarizer suitable for use in this invention is described in U.S. Patents 4,895,769 and 4,659,523. The polarizers described in these patents may be combined with the reflective polarizer preferably with the polyvinyl alcohol side of the polarizer adhesively bonded to the reflective polarizer. The dichroic polarizer may be made from relatively thin polyvinyl alcohol coatings (i.e., less than 4.5 grams per square meter). Thin coatings will have less absorption of the polarization perpendicular to the stretch direction, yet still have good extinction in first polarization when the high transmission axis is aligned with the high transmission axis of a reflective polarizer. Thin coatings are also faster to process.

Other optical films may be attached to or used in the optical path of the polarizer 10 for particular applications. Examples of these optical films include circular or elliptical diffusers that either preserve or randomize polarization, hardcoated films, antireflective films, textured antiglare films, compensation films or structures (used for example in liquid crystal displays), and optical retarders commonly used to convert linear to elliptically or circularly polarized light.

The preferred "A" layer of the multilayer reflective polarizer is a crystalline naphthalene dicarboxilic acid polyester such as polyethylene naphthalate (PEN), and the preferred "B" layer is a copolyester of naphthalene dicarboxilic acid and terephthalic acid (CoPEN). PEN and a 70 part naphthalate/30 part terephthalate copolyester (CoPEN) can be synthesized in standard polyester resin kettles using ethylene glycol as the diol. A satisfactory 204-layered polarizer was made by extruding PEN and CoPEN in a 51-slot feed block and then employing two layer doubling multipliers in series in the extrusion. The multipliers divide the extruded material exiting the feed block into two half-width flow streams, then stack the half-width flow streams on top of each other. Such multipliers are know in the art. The extrusion was performed at approximately 295°C. The PEN exhibited an intrinsic viscosity of 0.50 dl/g and the CoPEN exhibited an intrinsic viscosity of 0.60 dl/g. The extrusion rate for the PEN material was 22.5 lb./hr and the extrusion rate for the CoPEN was 16.5 lb./hr. The cast web was approximately 0.0038 inches in thickness and was uniaxially stretched at a 5:1 ratio in a longitudinal direction with the sides restrained at an air temperature of 140°C during stretching. Except for exterior skin layers, all PEN/CoPEN layer pairs were designed to be 1/2 wavelength optical thickness for a design wavelength of 550 nm.

Two 204-layer polarizers made as described above were then hand laminated using an adhesive. Preferably the refractive index of the adhesive should match the index of the isotropic CoPEN layer.

The polarizer of this invention has at least one dichroic polarizer and one reflective polarizer sections (as shown in FIG. 1). Other combinations are also suitable, including polarizers having either dichroic/reflective/dichroic sections or reflective/dichroic/reflective sections.

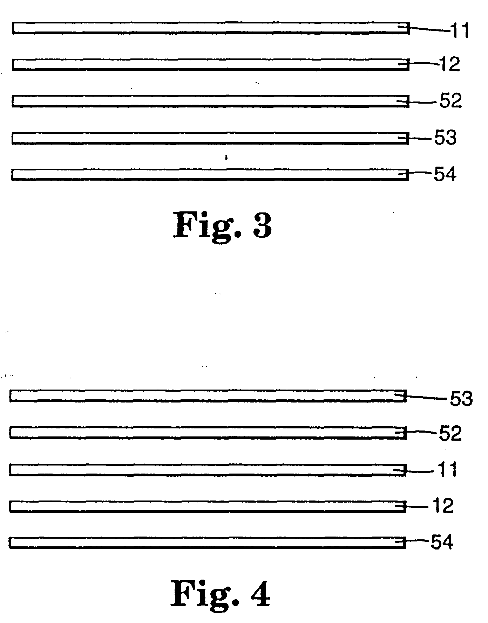

FIG. 3 shows the combined reflective polarizer 12 and dichroic polarizer 11 as used in a transmissive display. Liquid crystal module 52 switches the polarization of transmitted light supplied by backlight 54 through a conventional dichroic polarizer 53. In this mode, the reflective polarizer returns at least a portion of the light of the first polarization passed by the liquid crystal module 52 back into the backlight. This light may be recycled by the backlight and be used to increase the brightness of the display.

Fig. 4 shows the use of the combined polarizers 11 and 12 as the rear polarizer in a transmissive display. In this mode, the reflective polarizer may enhance the brightness of a display by returning the light of the first polarization that would ordinarily be absorbed by the rear dichroic polarizer in a conventional display.

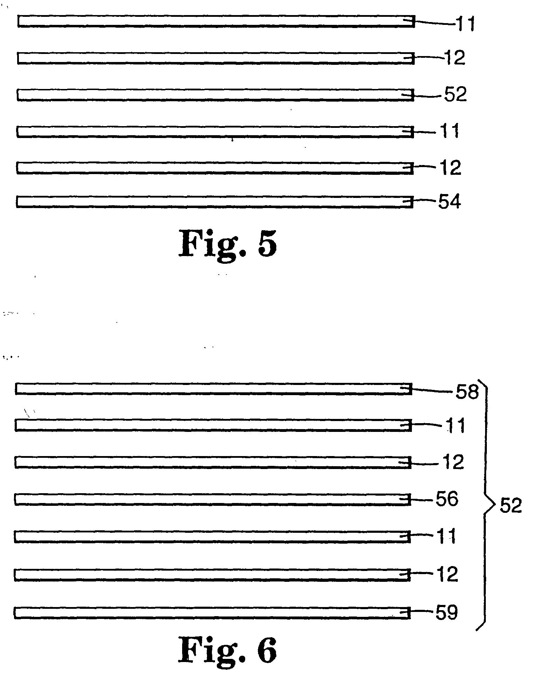

FIG. 5 shows combined polarizers 11 and 12 used as both the front and rear polarizers in a display. The displays shown in FIG. 3, 4, and 5 can be used in a transflective mode by inserting a partial reflector between the backlight and the rear polarizer, and can be used as a reflective display by replacing the backlight with a reflective film.

Most liquid crystal module 52 such as those shown in Figs. 3, 4, and 5 generally include a thin layer of liquid crystal material sandwiched between two glass layers. To minimize parallax, the configuration shown in Fig. 6 can be used. There the combined polarizers 11 and 12 are located between the liquid crystal 56 and glass layers 58 and 59 of the liquid crystal module 52. By locating the combined polarizers in this manner, parallax which may be otherwise introduced in varying degrees depending upon the thickness of the glass layers is eliminated.

Example 1

A Polaroid Corporation model number HN-38 dichroic polarizing film was placed against the multilayer reflective polarizer formed as discussed above. The polarizers were aligned for maximum transmission of one polarization. The combination of the dichroic and reflective polarizers eliminated visible iridescence of the reflective polarizing film when viewed in transmission in either direction. The dichroic polarizer also eliminated reflected visible iridescence from the reflective polarizer when viewed through the dichroic polarizer. This example shows that the combination of a dichroic polarizer with a reflective polarizer improves the cosmetic uniformity of the reflective polarizer.

Example 2

The reflectivity and transmissivity of the optical polarizer of Example 1 was measured with a Lambda 9 spectrophotometer at 550 nm using a sample beam polarized with a Melles-Griot dichroic polarizer model number 03-FPG-009. Reflectivity measurements were made using an integrating sphere. Separate reflectivity measurements were made with the samples backed first with a white diffuse reflector and then with a black backing. The transmissivity of the combined polarizers was 65.64% when aligned in the spectrophotometer for maximum transmission, and 0.05% when aligned for minimum transmission. When the dichroic polarizer was facing the integrating sphere and an absorbing backing was used, the reflectivity of the combined polarizers was 13.26% when aligned for maximum reflectivity and 4.37% when aligned for minimum reflectivity. The maximum and minimum reflectivity of the combined polarizers when the reflective polarizer was facing the integrating sphere was 99.22% and 16.58%, respectively. The above measurements were repeated with a white reflection standard behind the sample. The reflectivity of the combined polarizers with the dichroic polarizer facing the integrating sphere was 47.47% when aligned for maximum reflectivity, and 4.41% when aligned for minimum reflectivity. The maximum and minimum reflectivity of the combined polarizers when the reflective polarizer was facing the integrating sphere was 99.32% and 36.73%, respectively. This example shows that the combination of the two polarizers effectively renders one side of the reflective polarizer antireflected without substantially affecting the reflectivity of the other side of the reflective polarizer.

Example 3

The transmission of Polaroid Corporation model HN-38 dichroic polarizing film and the reflective polarizer of example 1 were measured at 430 nm using the procedure described in example 2. The transmission of the dichroic polarizer with the sample cross polarized to the sample beam was 0.63%. The transmission of the reflective polarizer under the same conditions was 48%. The transmission of the combination of the two polarizers aligned for minimum transmission was 0.31 %. This example shows that the extinction of a dichroic polarizer can be increased by including a reflective polarizer in the optical path.

Although the preferred reflective polarizer body 12 has been described as a multilayer stack of polymeric materials, it shall be understood that other reflective polarizers could be substituted therefore without departing from the scope of the present invention. Other reflective polarizers include cholesteric liquid crystal polarizers using an optical retarder placed between the reflective polarizer and dichroic polarizer, tilted optic prismatic and non-prismatic multilayer polarizers, and first-order diffractive polarizers.

Optical Behavior of Multilayer Stacks

The optical behavior of a multilayer stack such as that shown above will now be described in more general terms. The multilayer stack can include hundreds or thousands of layers, and each layer can be made from any of a number of different materials. The characteristics which determine the choice of materials for a particular stack depend upon the desired optical performance of the stack.

The stack can contain as many materials as there are layers in the stack. For ease of manufacture, preferred optical thin film stacks contain only a few different materials. For purposes of illustration, the present discussion will describe multilayer stacks including two materials.

The boundaries between the materials, or chemically identical materials with different physical properties, can be abrupt or gradual. Except for some simple cases with analytical solutions, analysis of the latter type of stratified media with continuously varying index is usually treated as a much larger number of thinner uniform layers having abrupt boundaries but with only a small change in properties between adjacent layers.

The reflectance behavior at any angle of incidence, from any azimuthal direction, is determined by the indices of refraction in each film layer of the film stack. If we assume that all layers in the film stack receive the same process conditions, then we need only look at a single interface of a two component stack to understand the behavior of the entire stack as a function of angle.

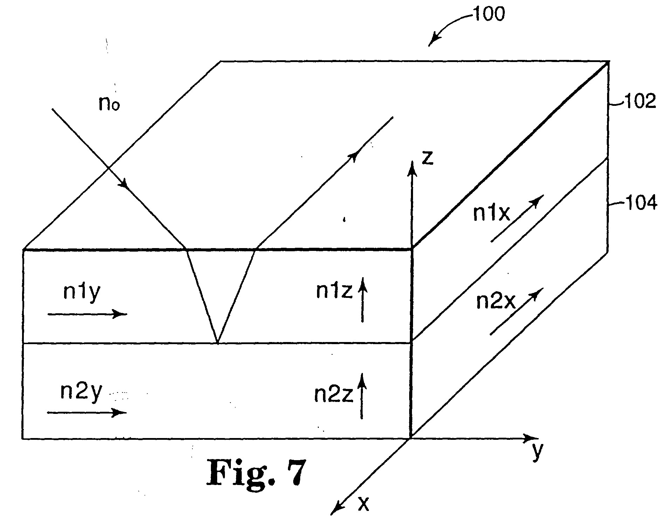

For simplicity of discussion, therefore, the optical behavior of a single interface will be described. It shall be understood, however, that an actual multilayer stack according to the principles described herein could be made of hundreds or thousands of layers. To describe the optical behavior of a single interface, such as the one shown in Fig. 7, the reflectivity as a function of angle of incidence for s and p polarized light for a plane of incidence including the z-axis and one in-plane optic axis will be plotted.

Fig. 7 shows two material film layers forming a single interface, with both immersed in an isotropic medium of index no. For simplicity of illustration, the present discussion will be directed toward an orthogonal multilayer birefringent system with the optical axes of the two materials aligned, and with one optic axis (z) perpendicular to the film plane, and the other optic axes along the x and y axis. It shall be understood, however, that the optic axes need not be orthogonal, and that nonothorgonal systems are well within the spirit and scope of the present invention. It shall be further understood that the optic axes also need not be aligned with the film axes to fall within the intended scope of the present invention.

The basic mathematical building blocks for calculating the optics of any stack of films of any thickness, are the well known Fresnel reflection and transmission coefficients of the individual film interfaces. The Fresnel coefficients predict the magnitude of the reflectivity of a given interface, at any angle of incidence, with separate formulas for s and p-polarized light.

The reflectivity of a dielectric interface varies as a function of angle of incidence, and for isotropic materials, is vastly different for p and s polarized light. The reflectivity minimum for p polarized light is due to the so called Brewster effect, and the angle at which the reflectance goes to zero is referred to as Brewster's angle.

The reflectance behavior of any film stack, at any angle of incidence, is determined by the dielectric tensors of all films involved. A general theoretical treatment of this topic is given in the text by R.M.A. Azzam and N.M. Bashara, "Ellipsometry and Polarized Light", published by North-Holland, 1987. The results proceed directly from the universally well known Maxwell's equations.

The reflectivity for a single interface of a system is calculated by squaring the absolute value of the reflection coefficients for p and s polarized light, given by equations 1 and 2, respectively. Equations 1 and 2 are valid for uniaxial orthogonal systems, with the axes of the two components aligned.

$$1) \quad r_{pp} = \frac{n2z * n2o \sqrt{(n1z2 - no2\sin2\theta)} - n1z * n1o \sqrt{(n2z2 - no2\sin2\theta)}}{n2z * n2o \sqrt{(n1z2 - no2\sin2\theta)} + n1z * n1o \sqrt{(n2z2 - no2\sin2\theta)}}$$

$$2) \quad r_{ss} = \frac{\sqrt{(n1o2 - no2\sin2\theta)} - \sqrt{(n2o2 - no2\sin2\theta)}}{\sqrt{(n1o2 - no2\sin2\theta)} + \sqrt{(n2o2 - no2\sin2\theta)}}$$

where $\theta$ is measured in the isotropic medium.

In a uniaxial birefringent system, n1x = n1y = n1o, and n2x = n2y = n2o.

For a biaxial birefringent system, equations 1 and 2 are valid only for light with its plane of polarization parallel to the x-z or y-z planes, as defined in Fig. 7. So, for a biaxial system, for light incident in the x-z plane, n1o = n1x and n2o = n2x in equation 1 (for p-polarized light), and n1o = n1y and n2o = n2y in equation 2 (for s-polarized light). For light incident in the y-z plane, n1o = n1y and n2o = n2y in equation 1 (for p-polarized light), and n1o = n1x and n2o = n2x in equation 2 (for s-polarized light).

Equations 1 and 2 show that reflectivity depends upon the indices of refraction in the x, y and z directions of each material in the stack. In an isotropic material, all three indices are equal, thus nx = ny = nz. The relationship between nx, ny and nz determine the optical characteristics of the material. Different relationships between the three indices lead to three general categories of materials: isotropic, uniaxially birefringent, and biaxially birefringent.

A uniaxially birefringent material is defined as one in which the index of refraction in one direction is different from the indices in the other two directions. For purposes of the present discussion, the convention for describing uniaxial birefringent systems is for the condition nx = ny $\neq$ nz. The x and y axes are defined as the in-plane axes and the respective indices, nx and ny, will be referred to as the in-plane indices.

One method of creating a uniaxial birefringent system is to biaxially stretch a polymeric multilayer stack (e. g., stretched along two dimensions). Biaxial stretching of the multilayer stack results in differences between refractive indices of adjoining layers for planes parallel to both axes thus resulting in reflection of light in both planes of polarization.

A uniaxial birefringent material can have either positive or negative uniaxial birefringence. Positive uniaxial birefringence occurs when the z-index is greater than the in-plane indices (nz > nx and ny). Negative uniaxial birefringence occurs when the z-index is less than the in-plane indices (nz < nx and ny).

A biaxial birefringent material is defined as one in which the indices of refraction in all three axes are different, e.g., nx $\neq$ ny $\neq$ nz. Again, the nx and ny indices will be referred to as the in-plane indices. A biaxial birefringent system can be made by stretching the multilayer stack in one direction. In other words the stack is uniaxially stretched. For purposes of the present discussion, the x direction will be referred to as the stretch direction for biaxial birefringent stacks.

Uniaxial Birefringent Systems (Mirrors)

The optical properties of uniaxial birefringent systems will now be discussed. As discussed above, the general conditions for a uniaxial birefringent material are nx = ny $\neq$ nz. Thus if each layer 102 and 104 in Fig. 7 is uniaxially birefringent, nix = n1y and n2x = n2y. For purposes of the present discussion, assume that layer 102 has larger in-plane indices than layer 104, and that thus n1 > n2 in both the x and y directions. The optical behavior of a uniaxial birefringent multilayer system can be adjusted by varying the values of nlz and n2z to introduce different levels of positive or negative birefringence.

Equation 1 described above can be used to determine the reflectivity of a single interface in a uniaxial birefringent system composed of two layers such as that shown in Fig.7. Equation 2, for s polarized light, is easily shown to be identical to that of the simple case of isotropic films (nx = ny = nz), so we need only examine equation 1. For purposes of illustration, some specific, although generic, values for the film indices will be assigned. Let n1x = n1y = 1.75, n1z = variable, n2x = n2y = 1.50, and n2z = variable. In order to illustrate various possible Brewster angles in this system, no = 1.60 for the surrounding isotropic media.

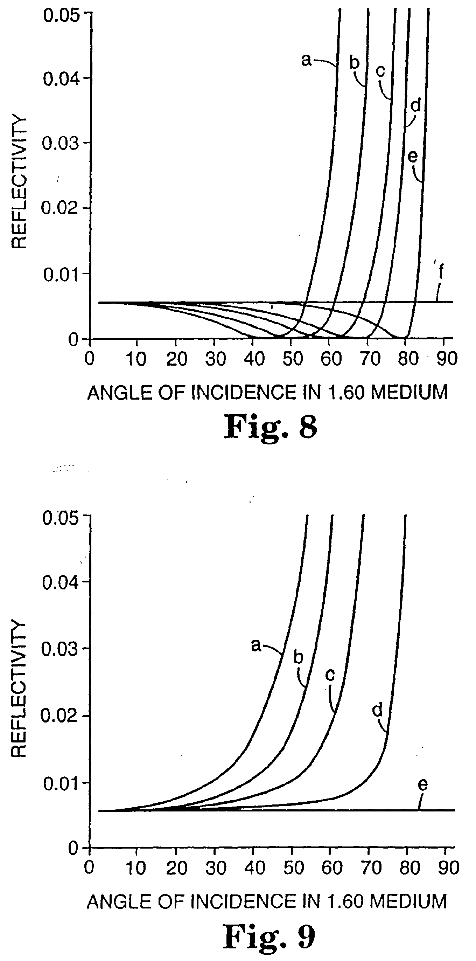

Fig. 8 shows reflectivity versus angle curves for p-polarized light incident from the isotropic medium to the birefringent layers, for cases where nlz is numerically greater than or equal to n2z (n1z $\geq$ n2z). The curves shown in Fig. 8 are for the following z-index values: a) n1z =1.75, n2z = 1.50; b) n1z = 1.75, n2z = 1.57; c) n1z = 1.70, n2z = 1.60; d) n1z = 1.65, n2z = 1.60; e) n1z = 1.61, n2z = 1.60; and f) n1z = 1.60 = n2z. As n1z approaches n2z, the Brewster angle, the angle at which reflectivity goes to zero, increases. Curves a-e are strongly angular dependent. However, when n1z = n2z (curve f), there is no angular dependence to reflectivity. In other words, the reflectivity for curve f is constant for all angles of incidence. At that point, equation 1 reduces to the angular independent form: (n2o - n1o)/ (n2o + n1o). When nlz = n2z, there is no Brewster effect and there is constant reflectivity for all angles of incidence.

Fig. 9 shows reflectivity versus angle of incidence curves for cases where n1z is numerically less than or equal to n2z. Light is incident from isotropic medium to the birefringent layers. For these cases, the reflectivity monotonically increases with angle of incidence. This is the behavior that would be observed for s-polarized light. Curve a in Fig. 9 shows the single case for s polarized light. Curves b-e show cases for p polarized light for various values of nz, in the following order: b) n1z =1.50, n2z = 1.60; c) n1z = 1.55, n2z = 1.60; d) n1z =1.59, n2z = 1.60; and e) n1z = 1.60 = n2z. Again, when n1z = n2z (curve e), there is no Brewster effect, and there is constant reflectivity for all angles of incidence.

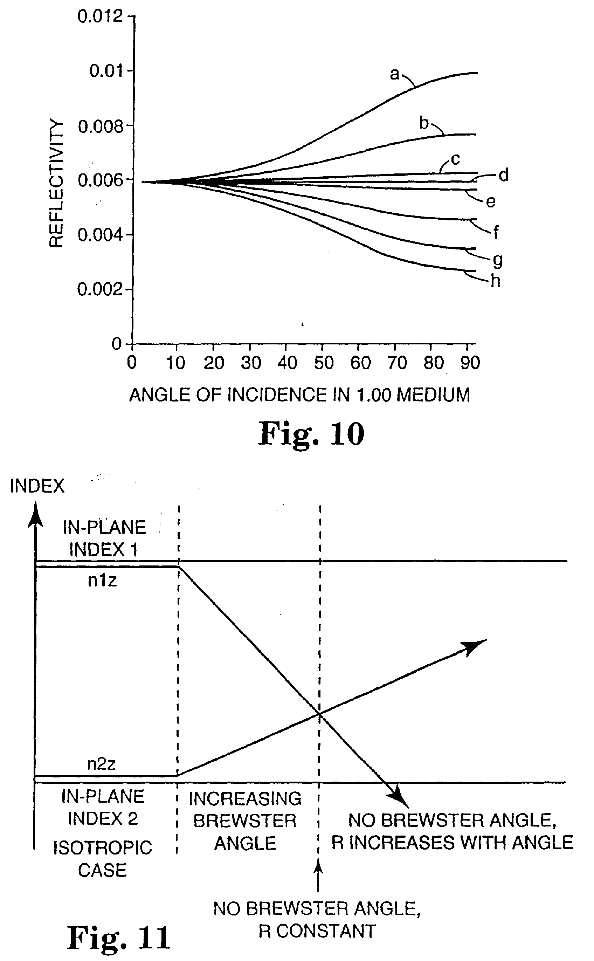

Fig. 10 shows the same cases as Fig. 8 and 9 but for an incident medium of index no =1.0 (air). The curves in Fig. 10 are plotted for p polarized light at a single interface of a positive uniaxial material of indices n2x = n2y = 1.50, n2z = 1.60, and a negative uniaxially birefringent material with n1x = n1y = 1.75, and values of n1z, in the following order, from top to bottom, of: a) 1.50; b) 1.55; c) 1.59; d) 1.60; f) 1.61; g) 1.65; h) 1.70; and i) 1.75. Again, as was shown in Figs. 8 and 9, when the values of nlz and n2z match (curve d), there is no angular dependence to reflectivity.

Figs. 8, 9 and 10 show that the cross-over from one type of behavior to another occurs when the z-axis index of one film equals the z-axis index of the other film. This is true for several combinations of negative and positive uniaxially birefringent, and isotropic materials. Other situations occur in which the Brewster angle is shifted to larger or smaller angles.

Various possible relationships between in-plane indices and z-axis indices are illustrated in Figs. 11, 12 and 13. The vertical axes indicate relative values of indices and the horizontal axes are used to simply separate the various conditions. Each Figure begins at the left with two isotropic films, where the z-index equals the in-plane indices. As one proceeds to the right, the in-plane indices are held constant and the various z-axis indices increase or decrease, indicating the relative amount of positive or negative birefringence.

The case described above with respect to Figs. 8, 9,and 10 is illustrated in Fig. 11. The in-plane indices of material one are greater than the in-plane indices of material two, material 1 has negative birefringence (n1z less than in-plane indices), and material two has positive birefringence (n2z greater than in-plane indices). The point at which the Brewster angle disappears and reflectivity is constant for all angles of incidence is where the two z-axis indices are equal. This point corresponds to curve f in Fig. 8, curve e in Fig. 9 or curve d in Fig. 10.

In Fig. 8, material one has higher in-plane indices than material two, but material one has positive birefringence and material two has negative birefringence. In this case, the Brewster minimum can only shift to lower values of angle.

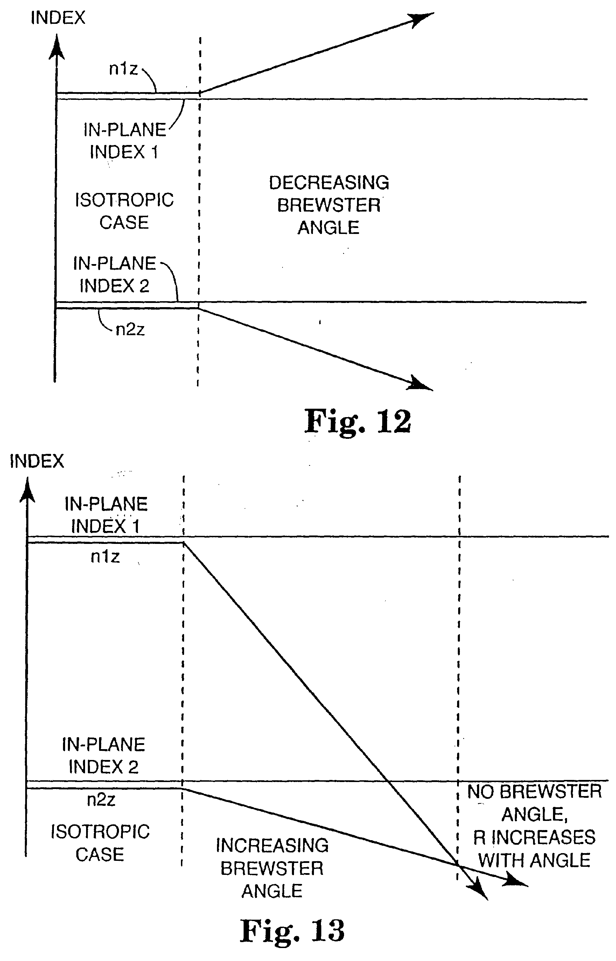

Both Figs. 11 and 12 are valid for the limiting cases where one of the two films is isotropic. The two cases are where material one is isotropic and material two has positive birefringence, or material two is isotropic and material one has negative birefringence. The point at which there is no Brewster effect is where the z-axis index of the birefringent material equals the index of the isotropic film.

Another case is where both films are of the same type, i.e., both negative or both positive birefringent. Fig. 13 shows the case where both films have negative birefringence. However, it shall be understood that the case of two positive birefringent layers is analogous to the case of two negative birefringent layers shown in Fig. 13. As before, the Brewster minimum is eliminated only if one z-axis index equals or crosses that of the other film.

Yet another case occurs where the in-plane indices of the two materials are equal, but the z-axis indices differ. In this case, which is a subset of all three cases shown in Figs. 11-13, no reflection occurs for s polarized light at any angle, and the reflectivity for p polarized light increases monotonically with increasing angle of incidence. This type of article has increasing reflectivity for p-polarized light as angle of incidence increases, and is transparent to s-polarized light. This article can be referred to, then, as a "p-polarizer".

Those of skill in the art will readily recognize that the above described principles describing the behavior of uniaxially birefringent systems can be applied to create the desired optical effects for a wide variety of circumstances. The indices of refraction of the layers in the multilayer stack can be manipulated and tailored to produce devices having the desired optical properties. Many negative and positive uniaxial birefringent systems can be created with a variety of in-plane and z-axis indices, and many useful devices can be designed and fabricated using the principles described here.

## Biaxial Birefringent Systems (Polarizers)

Referring again to Fig. 7, two component orthogonal biaxial birefringent systems will now be described. Again, the system can have many layers, but an understanding of the optical behavior of the stack is achieved by examining the optical behavior at one interface.

A biaxial birefringent system can be designed to give high reflectivity for light with its plane of polarization parallel to one axis, for all angles of incidence, and simultaneously have low reflectivity for light with its plane of polarization parallel to the other axis at all angles of incidence. As a result, the biaxial birefringent system acts as a polarizer, transmitting light of one polarization and reflecting light of the other polarization. By controlling the three indices of refraction of each film, nx, ny and nz, the desired polarizer behavior can be obtained.

The multilayer reflecting polarizer of PEN/coPEN described above is an example of a biaxial birefringent system. It shall be understood, however, that in general the materials used to construct the multilayer stack need not be polymeric. Any materials falling within the general principles described herein could be used to construct the multilayer stack.

Referring again to Fig. 7, we assign the following values to the film indices for purposes of illustration: n1x = 1.88, n1y = 1.64, n1z = variable, n2x = 1.65, n2y = variable, and n2z = variable. The x direction is referred to as the extinction direction and the y direction as the transmission direction.

Equation 1 can be used to predict the angular behavior of the biaxial birefringent system for two important cases of light with a plane of incidence in either the stretch or the non-stretch directions. The polarizer is a mirror in one polarization direction and a window in the other direction. In the stretch direction, the large index differential of 1.88 - 1.65 = 0.23 in a multilayer stack with hundreds of layers will yield very high reflectivities for s-polarized light. For p-polarized light the reflectance at various angles depends on the n1z/n2z index differential.

In most applications, the ideal reflecting polarizer has high reflectance along one axis and zero reflectance along the other, at all angles of incidence. If some reflectivity occurs along the transmission axis, and if it is different for various wavelengths, the efficiency of the polarizer is reduced, and color is introduced into the transmitted light. Both effects are undesirable. This is caused by a large z-index mismatch, even if the in-plane y indices are matched. The resulting system thus has large reflectivity for p, and is highly transparent to s polarized light. This case was referred to above in the analysis of the mirror cases as a "p polarizer".

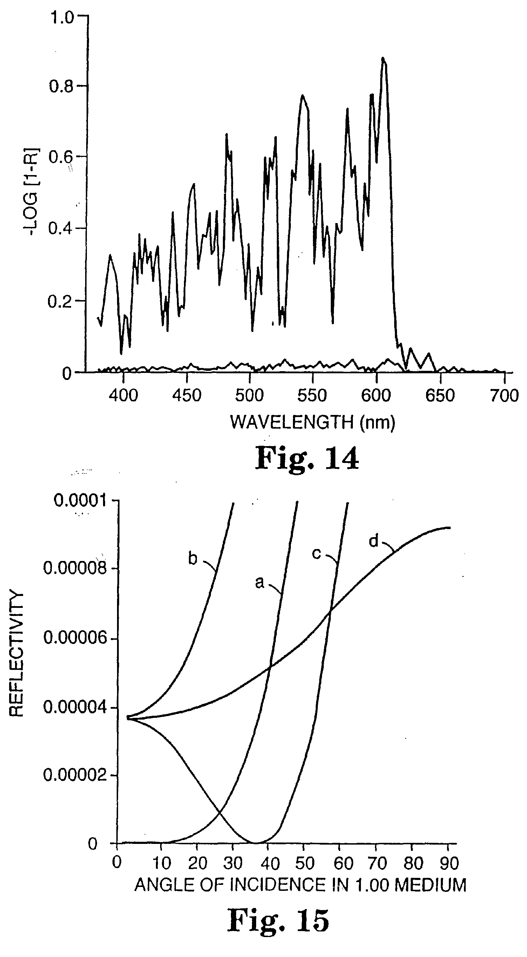

Fig. 14 shows the reflectivity (plotted as -Log[1-R]) at 75° for p polarized light with its plane of incidence in the non-stretch direction, for an 800 layer stack of PEN/coPEN. The reflectivity is plotted as function of wavelength across the visible spectrum (400 - 700 nm). The relevant indices for curve a at 550 nm are n1y =1.64, n1z = 1.52, n2y = 1.64 and n2z = 1.63. The model stack design is a simple linear thickness grade for quarterwave pairs, where each pair is 0.3% thicker than the previous pair. All layers were assigned a random thickness error with a gaussian distribution and a 5% standard deviation.

Curve a shows high off-axis reflectivity across the visible spectrum along the transmission axis (the y-axis) and that different wavelengths experience different levels of reflectivity. Since the spectrum is sensitive to layer thickness errors and spatial nonuniformities, such as film caliper, this gives a biaxial birefringent system with a very nonuniform and "colorful" appearance. Although a high degree of color may be desirable for certain applications, it is desirable to control the degree of off-axis color, and minimize it for those applications requiring a uniform, low color appearance, such as LCD displays or other types of displays.

If the film stack were designed to provide the same reflectivity for all visible wavelengths, a uniform, neutral gray reflection would result. However, this would require almost perfect thickness contorl. Instead, off-axis reflectivity, and off-axis color can be minimized by introducing an index mismatch to the non-stretch in-plane indices (n1y and n2y) that create a Brewster condition off axis, while keeping the s-polarization reflectivity to a minimum.

Fig. 15 explores the effect of introducing a y-index mismatch in reducing off-axis reflectivity along the transmission axis of a biaxial birefringent system. With n1z = 1.52 and n2z = 1.63 (Δnz = 0.11), the following conditions are plotted for p polarized light: a) n1y = n2y = 1.64; b) n1y = 1.64, n2y = 1.62; c) n1y = 1.64, n2y = 1.66. Curve a shows the reflectivity where the in-plane indices nly and n2y are equal. Curve a has a reflectance minimum at 0°, but rises steeply after 20°. For curve b, n1y > n2y, and reflectivity increases rapidly. Curve c, where n1y < n2y, has a reflectance minimum at 38°, but rises steeply thereafter. Considerable reflection occurs as well for s polarized light for n1y ≠ n2y, as shown by curve d. Curves a -d of Fig. 15 indicate that the sign of the y-index mismatch (n1y - n2y) should be the same as the z-index mismatch (n1z- n2z) for a Brewster minimum to exist. For the case of n1y = n2y, reflectivity for s polarized light is zero at all angles.

By reducing the z-axis index difference between layers, the off axis reflectivity can be further reduced. If n1z is equal to n2z, Fig. 10 indicates that the extinction axis will still have a high reflectivity off-angle as it does at normal incidence, and no reflection would occur along the nonstretch axis at any angle because both indices are matched (e. g., n1y = n2y and n1z = n2z).

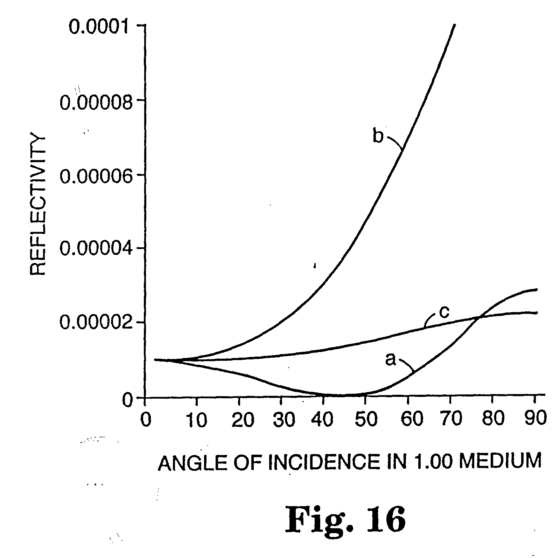

Exact matching of the two y indices and the two z indices may not be possible in some polymer systems. If the z-axis indices are not matched in a polarizer construction, a slight mismatch may be required for in-plane indices n1y and n2y. Another example is plotted in FIG. 16 assuming n1z = 1.56 and n2z = 1.60 (Δnz = 0.04), with the following y indices a) n1y = 1.64, n2y = 1.65; b) n1y = 1.64, n2y = 1.63. Curve c is for s-polarized light for either case. Curve a, where the sign of the y-index mismatch is the same as the z-index mismatch, results in the lowest off-angle reflectivity.

The computed off-axis reflectance of an 800 layer stack of films at 75° angle of incidence with the conditions of curve a in Fig. 16 is plotted as curve b in Fig. 14. Comparison of curve b with curve a in Fig. 14 shows that there is far less off-axis reflectivity, and therefore lower perceived color, for the conditions plotted in curve b. The relevant indices for curve b at 550 nm are n1y = 1.64, n1z = 1.56, n2y = 1.65 and n2z = 1.60.

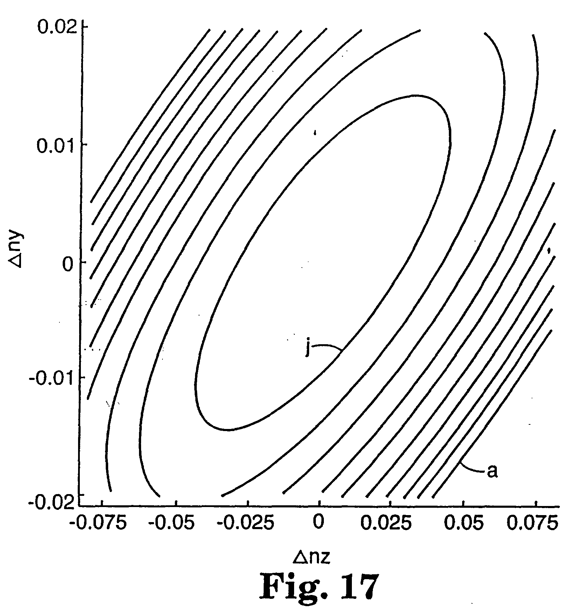

Fig. 17 shows a contour plot of equation 1 which summarizes the off axis reflectivity discussed in relation to Fig. 7 for p-polarized light. The four independent indices involved in the non-stretch direction have been reduced to two index mismatches, Δnz and Δny. The plot is an average of 6 plots at various angles of incidence from 0° to 75° in 15 degree increments. The reflectivity ranges from 0.4 x 10-4 for contour a, to 4.0 x 10-4 for contour j, in constant increments of 0.4 x 10 -4. The plots indicate how high reflectivity caused by an index mismatch along one optic axis can be offset by a mismatch along the other axis.

Thus, by reducing the z-index mismatch between layers of a biaxial birefringent systems, and/or by introducing a y-index mismatch to produce a Brewster effect, off-axis reflectivity, and therefore off-axis color, are minimized along the transmission axis of a multilayer reflecting polarizer.

It should also be noted that narrow band polarizers operating over a narrow wavelength range can also be designed using the principles described herein. These can be made to produce polarizers in the red, green, blue, cyan, magenta, or yellow bands, for example.

Materials Selection and Processing

With the above-described design considerations established, one of ordinary skill will readily appreciate that a wide variety of materials can be used to form multilayer mirrors or polarizers according to the invention when processed under conditions selected to yield the desired refractive index relationships. In general, all that is required is that one of the materials have a different index of refraction in a selected direction compared to the second material. This differential can be achieved in a variety of ways, including stretching during or after film formation (e.g., in the case of organic polymers), extruding (e.g., in the case of liquid crystalline materials), or coating. In addition, it is preferred that the two materials have similar rheological properties (e.g., melt viscosities) such that they can be co-extruded.

In general, appropriate combinations may be achieved by selecting, as the first material, a crystalline or semi-crystalline organic polymer and an organic polymer for the second material as well. The second material, in turn, may be crystalline, semi-crystalline, or amorphous, or may have a birefringence opposite that of the first material.

Specific examples of suitable materials include polyethylene naphthalate (PEN) and isomers thereof (e.g., 2,6-, 1,4-, 1,5-, 2,7-, and 2,3-PEN), polyalkylene terephthalates (e.g., polyethylene terephthalate, polybutylene terephthalate, and poly-1,4-cyclohexanedimethylene terephthalate), polyimides (e.g., polyacrylic imides), polyetherimides, atactic polystyrene, polycarbonates, polymethacrylates (e.g., polyisobutyl methacrylate, polypropylmethacrylate, polyethylmethacrylate, and polymethylmethacrylate), polyacrylates (e.g., polybutylacrylate and polymethylacrylate), cellulose derivatives (e.g., ethyl cellulose, cellulose acetate, cellulose propionate, cellulose acetate butyrate, and cellulose nitrate), polyalkylene polymers (e.g., polyethylene, polypropylene, polybutylene, polyisobutylene, and poly(4-methyl) pentene), fluorinated polymers (e.g., perfluoroalkoxy resins, polytetrafluoroethylene, fluorinated ethylenepropylene copolymers, polyvinylidene fluoride, and polychlorotrifluoroethylene), chlorinated polymers (e.g., polyvinylidene chloride and polyvinylchloride), polysulfones, polyethersulfones, polyacrylonitrile, polyamides, silicone resins, epoxy resins, polyvinylacetate, polyether-amides, ionomeric resins, elastomers (e.g., polybutadiene, polyisoprene, and neoprene), and polyurethanes. Also suitable are copolymers, e.g., copolymers of PEN (e.g., copolymers of 2,6-, 1,4-, 1,5-, 2,7-, and/or 2,3-naphthalene dicarboxylic acid, or esters thereof, with (a) terephthalic acid, or esters thereof; (b) isophthalic acid, or esters thereof; (c) phthalic acid, or esters thereof; (d) alkane glycols; (e) cycloalkane glycols (e.g., cyclohexane dimethanol diol); (f) alkane dicarboxylic acids; and/or (g) cycloalkane dicarboxylic acids (e.g., cyclohexane dicarboxylic acid)), copolymers of polyalkylene terephthalates (e.g., copolymers of terephthalic acid, or esters thereof, with (a) naphthalene dicarboxylic acid, or esters thereof; (b) isophthalic acid, or esters thereof; (c) phthalic acid, or esters thereof; (d) alkane glycols; (e) cycloalkane glycols (e.g., cyclohexane dimethanol diol); (f) alkane dicarboxylic acids; and/or (g) cycloalkane dicarboxylic acids (e.g., cyclohexane dicarboxylic acid)), and styrene copolymers (e.g., styrene-butadiene copolymers and styrene-acrylonitrile copolymers), 4, 4' bibenzoic acid and ethylene glycol. In addition, each individual layer may include blends of two or more of the above-described polymers or copolymers (e.g., blends of SPS and atactic polystyrene).

Particularly preferred combinations of layers in the case of polarizers include PEN/co-PEN, polyethylene terephthalate (PET)/co-PEN, PEN/SPS, PET/SPS, PEN/Eastair, and PET/Eastair, where "co-PEN" refers to a copolymer or blend based upon naphthalene dicarboxylic acid (as described above) and Eastair is polycyclohexanedimethylene terephthalate commercially available from Eastman Chemical Co.

Particularly preferred combinations of layers in the case of mirrors include PET/Ecdel, PEN/Ecdel, PEN/SPS, PEN/THV, PEN/co-PET, and PET/SPS, where "co-PET" refers to a copolymer or blend based upon terephthalic acid (as described above), Ecdel is a thermoplastic polyester commercially available from Eastman Chemical Co., and THV is a fluoropolymer commercially available from 3M Co.

The number of layers in the device is selected to achieve the desired optical properties using the minimum number of layers for reasons of economy. In the case of both polarizers and mirrors, the number of layers is preferably less than 10,000, more preferably less than 5,000, and (even more preferably) less than 2,000.

As discussed above, the ability to achieve the desired relationships among the various indices of refraction (and thus the optical properties of the multilayer device) is influenced by the processing conditions used to prepare the multilayer device. In the case of organic polymers which can be oriented by stretching, the devices are generally prepared by co-extruding the individual polymers to form a multilayer film and then orienting the film by stretching at a selected temperature, optionally followed by heat-setting at a selected temperature. Alternatively, the extrusion and orientation steps may be performed simultaneously. In the case of polarizers, the film is stretched substantially in one direction (uniaxial orientation), while in the case of mirrors the film is stretched substantially in two directions (biaxial orientation).

The film may be allowed to dimensionally relax in the cross-stretch direction from the natural reduction in cross-stretch (equal to the square root of the stretch ratio) to being constrained (i.e., no substantial change in cross-stretch dimensions). The film may be stretched in the machine direction, as with a length orienter, in width using a tenter, or at diagonal angles.

The pre-stretch temperature, stretch temperature, stretch rate, stretch ratio, heat set temperature, heat set time, heat set relaxation, and cross-stretch relaxation are selected to yield a multilayer device having the desired refractive index relationship. These variables are inter-dependent; thus, for example, a relatively low stretch rate could be used if coupled with, e.g., a relatively low stretch temperature. It will be apparent to one of ordinary skill how to select the appropriate combination of these variables to achieve the desired multilayer device. In general, however, a stretch ratio of 1:2-10 (more preferably 1:3-7) is preferred in the case of polarizers. In the case of mirrors, it is preferred that the stretch ratio along one axis be in the range of 1:2-10 (more preferably 1:2-8, and most preferably 1:3-7) and the stretch ratio along the second axis be in the range of 1:-0.5-10 (more preferably 1:1-7, and most preferably 1:3-6).

Suitable multilayer devices may also be prepared using techniques such as spin coating (e.g., as described in Boese et al., J. Polym. Sci.: Part B, 30:1321 (1992)) and vacuum deposition; the latter technique is particularly useful in the case of crystalline polymeric organic and inorganic materials.

The invention will now be described by way of the following examples. In the examples, because optical absorption is negligible, reflection equals 1 minus tranmission (R = 1 - T).

**Mirror Examples:**

**PET:Ecdel, 601** A coextruded film containing 601 layers was made on a sequential flat-film-making line via a coextrusion process. Polyethylene terephthalate (PET) with an Intrinsic Viscosity of 0.6 dl/g (60 wt. % phenol/40 wt. % dichlorobenzene) was delivered by one extruder at a rate of 75 pounds per hour and Ecdel 9966 (a thermoplastic elastomer available from Eastman Chemical) was delivered by another extruder at a rate of 65 pounds per hour. PET was on the skin layers. The feedblock method (such as that described in U.S. Patent 3,801,429) was used to generate 151 layers which was passed through two multipliers producing an extrudate of 601 layers. U.S. Patent 3,565,985 describes examplary coextrusion multipliers. The web was length oriented to a draw ratio of about 3.6 with the web temperature at about 210°F. The film was subsequently preheated to about 235°F in about 50 seconds and drawn in the transverse direction to a draw ratio of about 4.0 at a rate of about 6% per second. The film was then relaxed about 5% of its maximum width in a heat-set oven set at 400°F. The finished film thickness was 2.5 mil.

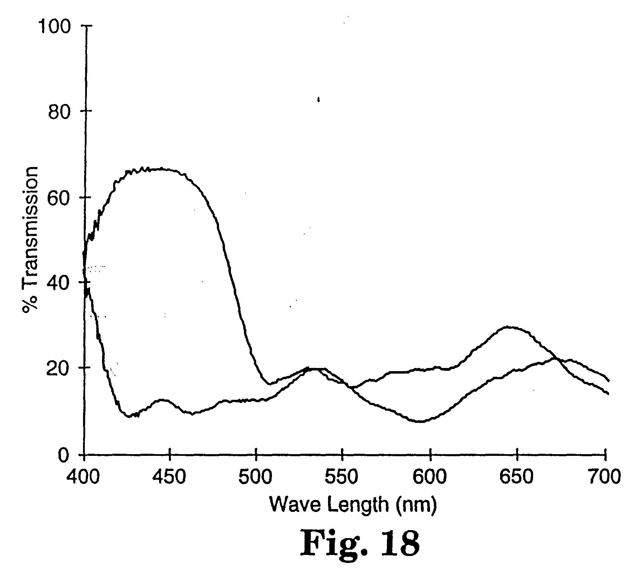

The cast web produced was rough in texture on the air side, and provided the transmission as shown in Figure 18. The % transmission for p-polarized light at a 60° angle (curve b) is similar the value at normal incidence (curve a) (with a wavelength shift).

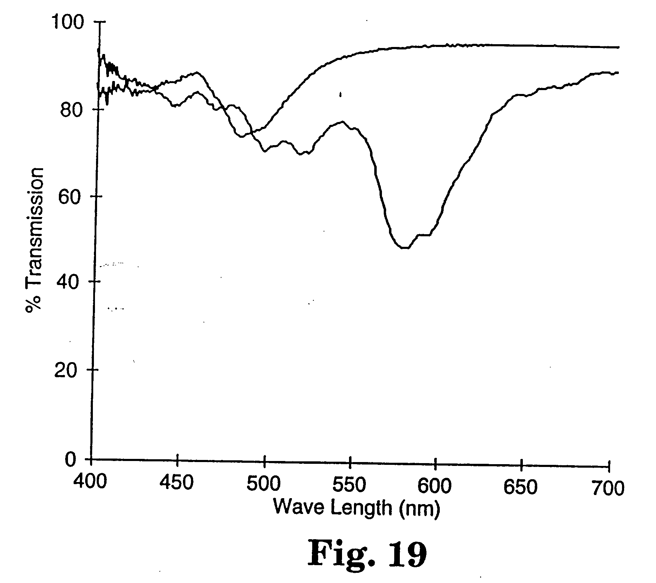

For comparison, film made by Mearl Corporation, presumably of isotropic materials (see Fig. 19 )shows a noticeable loss in reflectivity for p-polarized light at a 60° angle (curve b, compared to curve a for normal incidence).

**PET:Ecdel, 151** A coextruded film containing 151 layers was made on a sequential flat-film-making line via a coextrusion process. Polyethylene terephthalate (PET) with an Intrinsic Viscosity of 0.6 dl/g (60 wt phenol/40 wt. % dichlorobenzene) was delivered by one extruder at a rate of 75 pounds per hour and Ecdel 9966 (a thermoplastic elastomer available from Eastman Chemical) was delivered by another extruder at a rate of 65 pounds per hour. PET was on the skin layers. The feedblock method was used to generate 151 layers. The web was length oriented to a draw ratio of about 3.5 with the web temperature at about 210°F. The film was subsequently preheated to about 215°F in about 12 seconds and drawn in the transverse direction to a draw ratio of about 4.0 at a rate of about 25% per second. The film was then relaxed about 5% of its maximum width in a heat-set oven set at 400°F in about 6 seconds. The finished film thickness was about 0.6 mil.

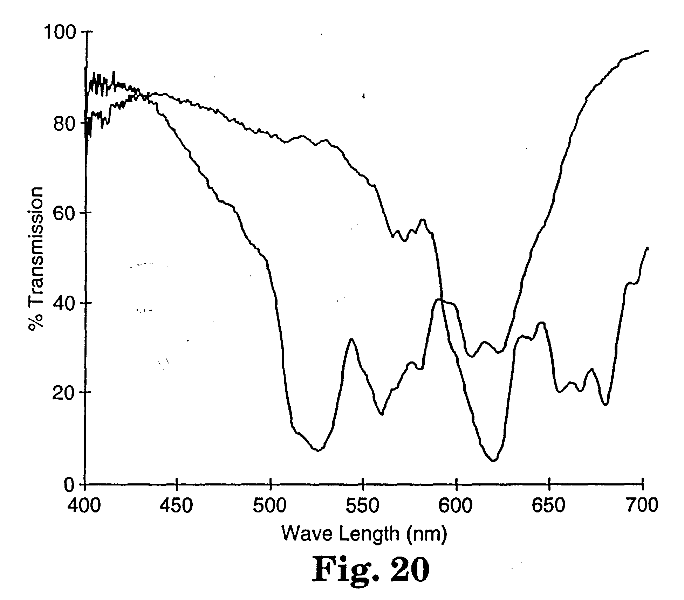

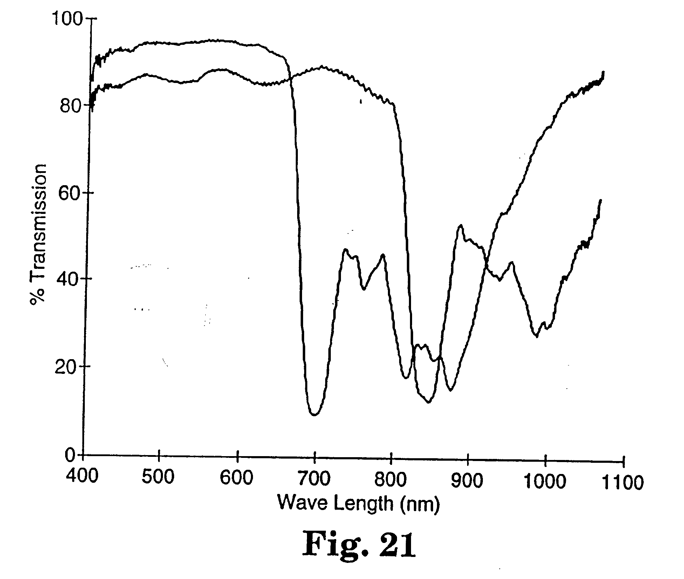

The transmission of this film is shown in Figure 20. The % transmission for p-polarized light at a 60° angle (curve b) is similar the value at normal incidence (curve a) with a wavelength shift. At the same extrusion conditions the web speed was slowed down to make an infrared reflecting film with a thickness of about 0.8 mils. The transmission is shown in Fig. 21 (curve a at normal incidence, curve b at 60 degrees).

**PEN:Ecdel, 225** A coextruded film containing 225 layers was made by extruding the cast web in one operation and later orienting the film in a laboratory film-stretching apparatus. Polyethylene naphthalate (PEN) with an Intrinsic Viscosity of 0.5 dl/g (60 wt. % phenol/40 wt. % dichlorobenzene) was delivered by one extruder at a rate of 18 pounds per hour and Ecdel 9966 (a thermoplastic elastomer available from Eastman Chemical) was delivered by another extruder at a rate of 17 pounds per hour. PEN was on the skin layers. The feedblock method was used to generate 57 layers which was passed through two multipliers producing an extrudate of 225 layers. The cast web was 12 mils thick and 12 inches wide. The web was later biaxially oriented using a laboratory stretching device that uses a pantograph to grip a square section of film and simultaneously stretch it in both directions at a uniform rate. A 7.46 cm square of web was loaded into the stretcher at about 100°C and heated to 130°C in 60 seconds. Stretching then commenced at 100%/sec (based on original dimensions) until the sample was stretched to about 3.5 x 3.5. Immediately after the stretching the sample was cooled by blowing room temperature air on it.

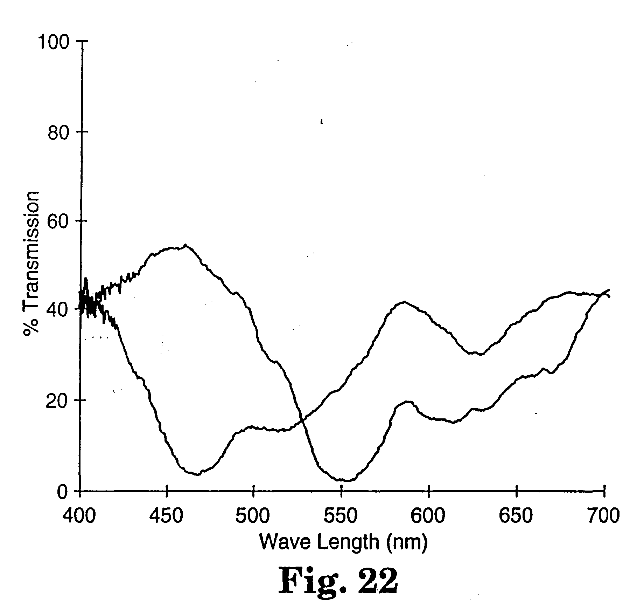

Figure 22 shows the optical response of this multilayer film (curve a at normal incidence, curve b at 60 degrees). Note that the % transmission for p-polarized light at a 60° angle is similar to what it is at normal incidence (with some wavelength shift).

**PEN:THV 500, 449** A coextruded film containing 449 layers was made by extruding the cast web in one operation and later orienting the film in a laboratory film-stretching apparatus. Polyethylene naphthalate (PEN) with an Intrinsic Viscosity of 0.53 dl/g (60 wt. % phenol/40 wt. % dichlorobenzene) was delivered by one extruder at a rate of 56 pounds per hour and THV 500 (a fluoropolymer available from Minnesota Mining and Manufacturing Company) was delivered by another extruder at a rate of 11 pounds per hour. PEN was on the skin layers and 50% of the PEN was present in the two skin layers. The feedblock method was used to generate 57 layers which was passed through three multipliers producing an extrudate of 449 layers. The cast web was 20 mils thick and 12 inches wide. The web was later biaxially oriented using a laboratory stretching device that uses a pantograph to grip a square section of film and simultaneously stretch it in both directions at a uniform rate. A 7.46 cm square of web was loaded into the stretcher at about 100°C and heated to 140°C in 60 seconds. Stretching then commenced at 10%/sec (based on original dimensions) until the sample was stretched to about 3.5x3.5. Immediately after the stretching the sample was cooled by blowing room temperature air at it.

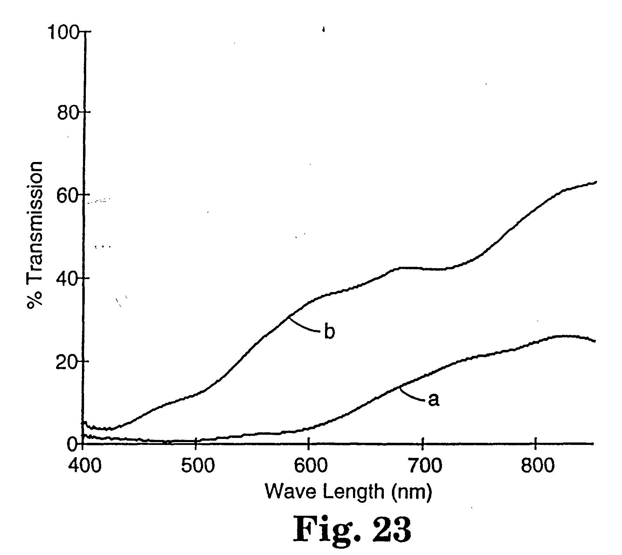

Figure 23 shows the transmission of this multilayer film. Again, curve a shows the response at normal incidence, while curve b shows the response at 60 degrees.

**Polarizer Examples:**

**PEN:CoPEN, 449-Low Color** A coextruded film containing 449 layers was made by extruding the cast web in one operation and later orienting the film in a laboratory film-stretching apparatus. Polyethylene naphthalate (PEN) with an Intrinsic Viscosity of 0.56 dl/g (60 wt. % phenol/40 wt. % dichlorobenzene) was delivered by one extruder at a rate of 43 pounds per hour and a CoPEN (70 mol% 2,6 NDC and 30 mol% DMT) with an intrinsic viscosity of 0.52 (60 wt. % phenol/40 wt. % dichlorobenzene) was delivered by another extruder at a rate of 25 pounds per hour. PEN was on the skin layers and 40% of the PEN was present in the two skin layers. The feedblock method was used to generate 57 layers which was passed through three multipliers producing an extrudate of 449 layers. The cast web was 10 mils thick and 12 inches wide. The web was later uniaxially oriented using a laboratory stretching device that uses a pantograph to grip a square section of film and stretch it in one direction while it is constrained in the other at a uniform rate. A 7.46 cm square of web was loaded into the stretcher at about 100°C and heated to 140°C in 60 seconds. Stretching then commenced at 10%/sec (based on original dimensions) until the sample was stretched to about 5.5 x 1. Immediately after the stretching the sample was cooled by blowing room temperature air at it.

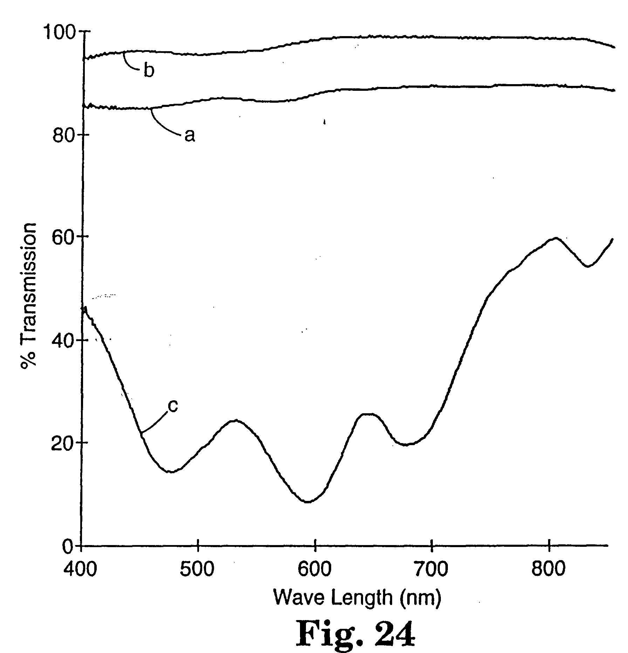

Figure 24 shows the transmission of this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (85-100%). Transmission is higher for p-polarized light at 60° incidence because the air/PEN interface has a Brewster angle near 60°, so the tranmission at 60° incidence is nearly 100%. Also note the high extinction of s-polarized light in the visible range (400-700nm) shown by curve c.

**PEN:CoPEN, 601--High Color** A coextruded film containing 601 layers was produced by extruding the web and two days later orienting the film on a different tenter than described in all the other examples. Polyethylene Naphthalate (PEN) with an Intrinsic Viscosity of 0.5 dl/g (60 wt. % phenol/40 wt. % dichlorobenzene) was delivered by one extruder at a rate of 75 pounds per hour and CoPEN (70 mol% 2,6 NDC and 30 mol% DMT) with an IV of 0.55 dl/g (60 wt. % phenol/40 wt. % dichlorobenzene) was delivered by another extruder at a rate of 65 pounds per hour. PEN was on the skin layers. The feedblock method was used to generate 151 layers which was passed through two multipliers producing an extrudate of 601 layers. U.S. Patent 3,565,985 describes similar coextrusion multipliers. All stretching was done in the tenter. The film was preheated to about 280°F in about 20 seconds and drawn in the transverse direction to a draw ratio of about 4.4 at a rate of about 6% per second. The film was then relaxed about 2% of its maximum width in a heat-set oven set at 460°F. The finished film thickness was 1.8 mil.

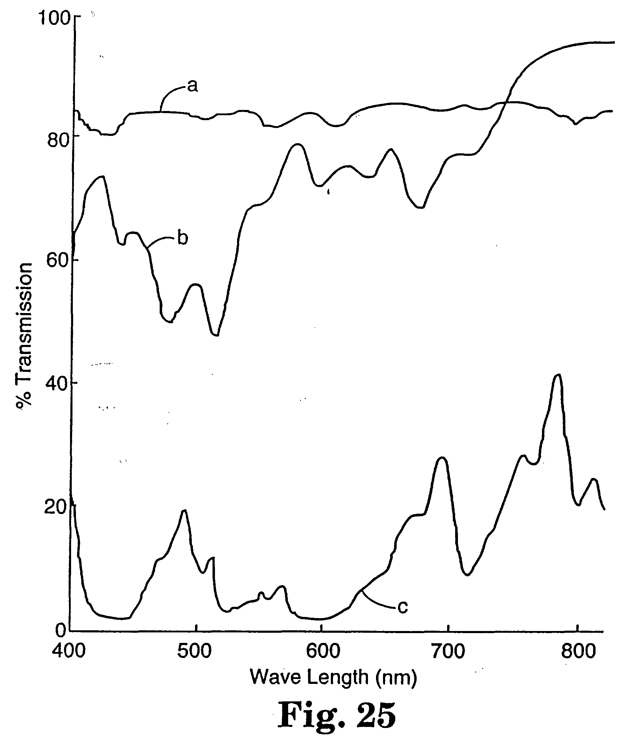

The transmission of the film is shown in Figure 25. Curve a shows transmission of p-polarized light at normal incidence, curve b shows transmission of p-polarized light at 60° incidence, and curve c shows transmission of s-polarized light at normal incidence. Note the nonuniform transmission of p-polarized light at both normal and 60° incidence. Also note the non-uniform extinction of s-polarized light in the visible range (400-700nm) shown by curve c.

**PET:CoPEN, 449** A coextruded film containing 449 layers was made by extruding the cast web in one operation and later orienting the film in a laboratory film-stretching apparatus. Polyethylene Terephthalate (PET) with an Intrinsic Viscosity of 0.60 dl/g (60 wt. % phenol/40 wt. % dichlorobenzene) was delivered by one extruder at a rate of 26 pounds per hour and CoPEN (70 mol% 2,6 NDC and 30 mol% DMT) with an intrinsic viscosity of 0.53 (60 wt. % phenol/40 wt. % dichlorobenzene) was delivered by another extruder at a rate of 24 pounds per hour. PET was on the skin layers. The feedblock method was used to generate 57 layers which was passed through three multipliers producing an extrudate of 449 layers. U.S. Patent 3,565,985 describes similar coextrusion multipliers. The cast web was 7.5 mils thick and 12 inches wide. The web was later uniaxially oriented using a laboratory stretching device that uses a pantograph to grip a square section of film and stretch it in one direction while it is constrained in the other at a uniform rate. A 7.46 cm square of web was loaded into the stretcher at about 100°C and heated to 120°C in 60 seconds. Stretching then commenced at 10%/sec (based on original dimensions) until the sample was stretched to about 5.0x1. Immediately after the stretching the sample was cooled by blowing room temperature air at it. The finished film thickness was about 1.4 mil. This film had sufficient adhesion to survive the orientation process with no delamination.

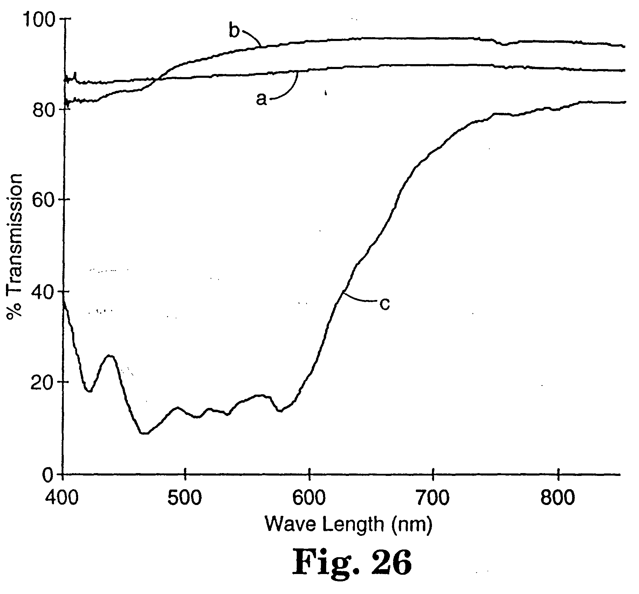

Figure 26 shows the transmission of this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (80-100%).

**PEN:coPEN, 601** A coextruded film containing 601 layers was made on a sequential flat-film-making line via a coextrusion process. Polyethylene naphthalate (PEN) with an intrinsic viscosity of 0.54 dl/g (60 wt % Phenol plus 40 wt % dichlorobenzene) was delivered by on extruder at a rate of 75 pounds per hour and the coPEN was delivered by another extruder at 65 pounds per hour. The coPEN was a copolymer of 70 mole % 2,6 naphthalene dicarboxylate methyl ester, 15 % dimethyl isophthalate and 15% dimethyl terephthalate with ethylene glycol. The feedblock method was used to generate 151 layers. The feedblock was designed to produce a gradient distribution of layers with a ration of thickness of the optical layers of 1.22 for the PEN and 1.22 for the coPEN. PEN skin layers were coextruded on the outside of the optical stack with a total thickness of 8% of the coextruded layers. The optical stack was multiplied by two sequential multipliers. The nominal multiplication ratio of the multipliers were 1.2 and 1.22, respectively. The film was subsequently preheated to 310°F in about 40 seconds and drawn in the transverse direction to a draw ratio of about 5.0 at a rate of 6% per second. The finished film thickness was about 2 mils.

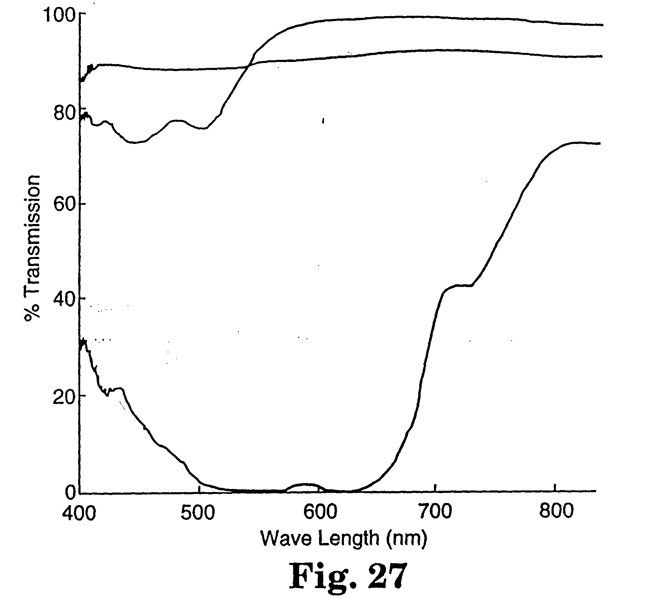

Figure 27 shows the transmission for this multilayer film. Curve a shows transmission of p-polarized light at normal incidence, curve b shows transmission of p-polarized light at 60° incidence, and curve c shows transmission of s-polarized light at normal incidence. Note the very high transmission of p-polarized light at both normal and 60° incidence (80-100%). Also note the very high extinction of s-polarized light in the visible range (400-700nm) shown by curve c. Extinction is nearly 100% between 500 and 650nm.

For those examples using the 57 layer feedblock, all layers were designed for only one optical thickness (1/4 of 550nm), but the extrusion equipment introduces deviations in the layer thicknesses throughout the stack resulting in a fairly broadband optical response. For examples made with the 151 layer feedblock, the feedblock is designed to create a distribution of layer thicknesses to cover a portion of the visible spectrum. Asymmetric multipliers were then used to broaden the distribution of layer thicknesses to cover most of the visible spectrum as described in U.S. Patents 5,094,788 and 5,094,793.

Although the present optical polarizer has been described with reference to the preferred embodiment, those skilled in the art will readily appreciate that other embodiments may be utilized and changes made in form and detail without departing from the spirit and scope of the present invention.

**Claims**

1. A method of manufacturing an optical polarizer comprising the steps of

   (a) incorporating a dichroic polarizer with reflective polarizer before orientation by extruding or laminating at least one layer of dichroic dyestuff in polymer onto a multilayer cast film and

   (b) stretching the resulting film, whereby the dichroic and reflective polarizers are simultaneously produced in the proper orientation.

2. The method of claim 1, wherein the dichroic dye is located in regions of greatest utility.

3. The method of claim 1, wherein the dichroic dye is an azo dye or anthraquinone.

4.  A method of manufacturing an optical polarizer comprising the steps of

    (a) incorporating the dichroic polarizer onto one or both sides of a reflective polarizer by coating a solution of polyvinyl alcohol onto the cast (unoriented) film and

    (b) stretching the polyvinyl alcohol coated cast film at elevated temperatures to develop oriented polyvinyl alcohol and the reflective polarizer.

5.  The method of claim 4, further comprising the step of
    (c) staining the oriented polyvinyl alcohol coating with either dye based staining solutions, iodine based staining solutions or combinations of both solutions.

6.  The method of claim 4 or 5, wherein in step (a) the cast film is primed for adhesion before coating.

7.  The method of claim 6, wherein the cast film is primed by solution coating on an inorganic or polymeric primer layer, corona treatment or physical treatment.

8.  The method of claim 7, wherein the coating solution contains between 2 and 20% by weight, preferably between 5 and 15% by weight, of polyvinyl alcohol in water.

9.  The method of claim 4 or 5, wherein the stretching temperature in step (b) is between 80 and 160 °C, preferably between 100 and 160 °C.

10. The method of claim 4 or 5, wherein the film is stretched 2 to 10 times, preferably 3 to 6 times the original dimension.

11. The method of claim 4 or 5, wherein the oriented polyvinyl alcohol coating is stabilized, preferably with boric acid and borax in water.

12. The method of claim 5, wherein after step (c) the film is dried and protected by adhesively laminating on a protective film.

13. The method of claim 12, wherein the protective film is selected from the group consisting of cellulose based polymers, acrylate polymers, polycarbonate polymers, solution based or radiation cured acrylate based adhesives or non-adhesive coatings, polyethylene terephthalate, polyester based films, an additional sheet of reflective polarizer film, a birefringent polymer and a biaxially oriented polyethylene terephtalate.

14. The method of any of the claims 1 to 13, wherein the dichroic and the reflective polarizer are aligned to provide maximum transmissivity.

15. An optical polarizer obtainable by a process according to any of the claims 1 to 14.

**Fig. 1**

**Fig. 2**

**Fig. 3**

**Fig. 4**

Fig. 5

Fig. 6

Fig. 7

Fig. 8

Fig. 9

**Fig. 10**

**Fig. 11**

INDEX

n1z

IN-PLANE
INDEX 1

ISOTROPIC
CASE

DECREASING
BREWSTER
ANGLE

IN-PLANE
INDEX 2

n2z

## Fig. 12

INDEX

IN-PLANE
INDEX 1

n1z

IN-PLANE
INDEX 2

n2z

ISOTROPIC
CASE

INCREASING
BREWSTER
ANGLE

NO BREWSTER
ANGLE,
R INCREASES
WITH ANGLE

## Fig. 13

**Fig. 14**

**Fig. 15**

Fig. 16

Fig. 17

Fig. 18

## Fig. 19

Fig. 20

EP 1 126 292 A2

Fig. 21

29

**Fig. 22**

Fig. 23

Fig. 24

**Fig. 25**

Fig. 26

**Fig. 27**